# EUROPEAN PATENT APPLICATION

(11) **EP 2 325 004 A1**
(43) Date of publication of application: **25.05.2011**
(21) Application number: 09812980.2
(22) Date of filing: 14.08.2009
(51) Int. Cl.: B32B 27/00, G09F 9/00

(54) **LAMINATE AND DISPLAY DEVICE**

(30) Priority: 09.09.2008 JP 2008231113
(71) Applicant: Kimoto Co., Ltd., Shinjuku-ku Tokyo 160-0022 (JP)
(72) Inventor: NEGISHI, Satoshi, Saitama-shi Saitama 338-0013 (JP)
(74) Representative: Strehl Schübel-Hopf & Partner
(86) International application number: PCT/JP2009/064337
(87) International publication number: WO 2010/029833

(57) **Abstract**

There is provided a laminate not showing rise or separation of a plastic film from an adhesive layer, showing high stiffness even with a small thickness, and showing superior die cutting property. There is also provided a display device not showing blur of displayed images due to bending of a surface protection plate when the surface thereof is touched, and having a surface protection plate hardly broken by impact.

In a laminate comprising at least two or more plastic films adhered with an adhesive layer, Martens hardness of the adhesive layer is controlled to be 260 N/mm² or lower. Thickness of the laminate is controlled to be 250 to 700 µm, and thickness of each plastic film is controlled to be 50 to 400 µm.

## Description

### Technical Field

The present invention relates to a laminate (laminated plate) comprising a plurality of plastic films adhered with one another with an adhesive layer, which can provide high stiffness with a small thickness and can prevent separation of the plastic films from the adhesive layer at the time of die cutting. The present invention also relates to a display device, which uses a thin surface protection plate, but does not show blur of displayed images due to bending of the surface protection plate.

### Background Art

On the surfaces of display devices such as those of PC monitors, televisions and cellular phones, surface protection plates consisting of a glass plate, acrylic plate, polycarbonate plate or the like are disposed. Among those, acrylic plates and polycarbonate plates are widely used, because of the superior shatterproof property thereof compared with glass plates.

Such surface protection plates consisting of an acrylic plate or polycarbonate plate are produced by laser cutting of an acrylic plate or polycarbonate plate (Patent document 1).

However, it is difficult to simultaneously process two or more plates or a large plate by laser cutting. Therefore, processing by die cutting was contemplated. However, there arose a problem that thin acrylic plates and polycarbonate plates were broken by die cutting.

Therefore, it was attempted to use thin plastic films showing suitability for die cutting. However, thin plastic films show low stiffness, and they cause a problem that when display surfaces are touched, the surface protection plates are bent to cause blur of displayed images.

Therefore, the inventor of the present invention proposed a method for producing a surface protection plate for displays devices, which enables easy production of a surface protection plate showing high stiffness with a small thickness (Patent document 2). In this method, a laminated plate comprising two or more plastic films adhered with an adhesive layer and having a total thickness adjusted to be a predetermined thickness is subjected to die cutting.

### Prior Art References

### Patent documents

Patent document 1: Japanese Patent Unexamined Publication (KOKAI) No. 2002-60234 (claims)
Patent document 2: WO2007/080774 (claims)

### Summary of the Invention

### Object to be Achieved by the Invention

However, when the laminated plate is subjected to die cutting, rise or separation of the plastic films from the adhesive layer may be caused.

Therefore, an object of the present invention is to provide a laminated plate not showing rise or separation of plastic films from adhesive layer even if it is subjected to die cutting, and showing high stiffness with a small thickness. Another object of the present invention is to provide a display device not showing blur of displayed images due to bending of a surface protection plate when the surface is touched, in spite of use of a surface protection plate having a small thickness.

### Means for Achieving the Object

The inventors of the present invention found that rise or separation of the plastic film from the adhesive layer caused at the time of die cutting of the laminate plate could not be prevented only by increasing adhesive strength between the plastic film and the adhesive layer, and hardness of the adhesive layer related to the rise or separation, and accomplished the present invention.
That is, the laminated plate of the present invention, which achieves the aforementioned object, is a laminated plate comprising at least two or more plastic films adhered with an adhesive layer, wherein the adhesive layer has a Martens hardness of 260 N/mm² or smaller.

The laminated plate of the present invention may be characterized in that the laminated plate has a thickness of 250 to 700 µm, and each of the plastic films has a thickness of 50 to 400 µm.

The display device of the present invention is characterized by using the laminated plate of the present invention as a surface protection plate of the display device.

### Effect of the Invention

The laminated plate of the present invention does not show rise or separation of the plastic film from the adhesive layer, shows high stiffness with a small thickness, and can be a laminated plate showing superior suitability for die cutting.

Moreover, since the laminated plate of the present invention does not show rise or separation of the plastic film from the adhesive layer when it is subjected to die cutting, use thereof improves productivity of surface protection plates and also improves productivity of display devices. Further, by using the laminated plate of the present invention, there can be easily obtained a display device not showing blur of displayed images due to bending of a surface protection plate when the surface is touched, in spite of use of a surface protection plate having a small thickness, and having a surface protection plate hardly broken by impact.

### Brief Description of the Drawing

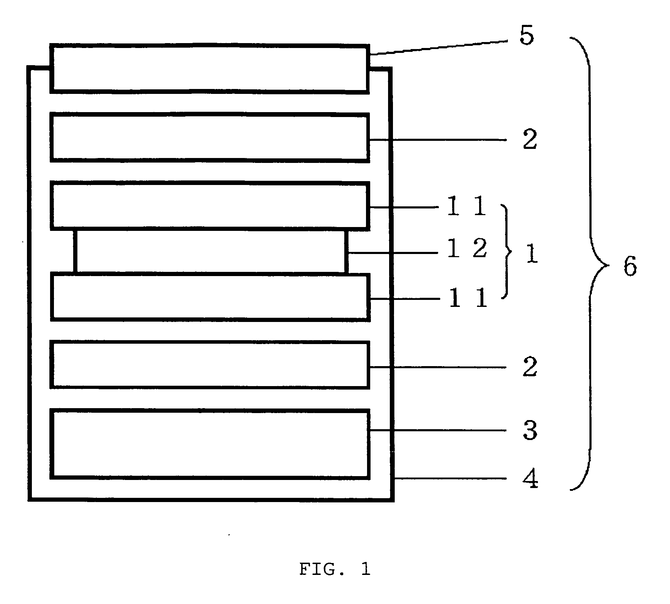

[Fig. 1] Fig. 1 is a sectional view of an example of the display device of the present invention.

### Modes for Carrying out the Invention

Hereafter, embodiments of the laminated plate of the present invention will be explained.

The laminated plate of the present invention has a structure that at least two or more plastic films are adhered with an adhesive layer. At least two plastic films are sufficient as the plastic films constituting the laminated plate, but the laminated plate may also be constituted with three or more plastic films.

Thickness of the laminated plate is preferably 250 to 700 µm, and it is preferably 300 µm or larger, more preferably 350 µm or larger. With a thickness of the laminated plate of 250 µm or larger, stiffness required for a surface protection plate can be obtained. That is, with such a thickness, it does not easily bent even when the surface thereof is touched, and thus blur of displayed images due to bending can be prevented. Further, with a thickness of 700 µm or smaller, die cutting of the laminated plate can be made easier.

By the structure that at least two or more plastic films are adhered with an adhesive layer, higher stiffness can be imparted to the laminated plate of the present invention compared with one sheet of plastic film having the same thickness, and breakage of the laminated plate of the present invention at the time of die cutting can be prevented. It is considered that the laminated plate can be made hard to be broken because plastic films having an easily die-cuttable thickness can be used as the plastic films constituting the laminated plate, and the adhesive layer absorbs impact at the time of die cutting.

Hereafter, each of the elements constituting the laminated plate of the present invention will be explained.
As the plastic film, polyester films such as those of polyethylene terephthalate, polybutylene terephthalate, and polyethylene naphthalate and various kinds of transparent plastic films consisting of polyethylene, polypropylene, triacetylcellulose, polyvinyl chloride or the like can be used. Among these, a stretched, especially biaxially stretched, polyethylene terephthalate film is preferred, since it has high stiffness and it is not easily broken at the time of die cutting. When three or more plastic films are used, it is preferable to use biaxially stretched polyethylene terephthalate films for at least both of the outermost surfaces to place the other plastic film or films between them. In addition, the surfaces of the plastic films may be subjected to an adhesion promoting treatment such as a corona discharge treatment or an adhesion promoting treatment using an undercoat layer.

Thickness of each plastic film is preferably 50 to 400 µm, more preferably 100 to 350 µm, still more preferably 150 to 300 µm. With a thickness of each plastic film within such a range, die cutting can be more easily performed, and breakage of the plastic film at the time of die cutting can be prevented. Moreover, in order to prevent generation of curl, it is preferable to use two plastic films having the same thickness when the laminated plate comprises two plastic films, and it is preferable to use two plastic films having the same thickness as the outermost plastic films when the laminated plate comprises three or more plastic films. For example, thin plastic films having the same thickness can be adhered on both surfaces of a plastic film having a thickness of 400 µm.

The adhesive layer consists of a resin and an additive added as required.
As the resin constituting the adhesive layer, thermosetting resins and ionizing radiation curable resins that are cured through crosslinking by heating and/or irradiation of ionizing radiation, etc. are preferably used. By curing of these resins through crosslinking, adhesion of these resins to plastic films can be increased, and stiffness of the laminated plate can be increased.

As the thermosetting resins, those that can be cured through crosslinking at a temperature lower than the heat resistant temperature of the plastic film are preferred, because of the reason concerning the production process that a coating solution containing a thermosetting resin is applied on the plastic film, and then the thermosetting resin is cured through crosslinking with heat. Specifically, crosslinkable resins that can be cured through crosslinking with heat, such as those of melamine type, epoxy type, amino-alkyd type, urethane type, acrylic type, polyester type and phenol type, can be used. In particular, acrylic thermosetting resins are preferred, which can provide high stiffness as the laminated plate, and show favorable adhesion property for the plastic film. Although these may be independently used, it is desirable to add a curing agent in order to further improve crosslinking property and hardness of film cured through crosslinking.

As the curing agent, such compounds as polyisocyanates, amino resins, epoxy resins and carboxylic acids can be appropriately used according to type of the resin so as to be compatible with the resin.

As the ionizing radiation curable resin, it is preferable to use those constituted with a coating material that can be cured through crosslinking at least by irradiation of ionizing radiation (ultraviolet radiation or electron beam). As such an ionizing radiation curing coating material, photo cation polymerizable resins that can be polymerized by photo cation polymerization, photopolymerizable prepolymers and photopolymerizable monomers that can be polymerized by photo radical polymerization, and so forth can be used independently or as a mixture of any two or more kinds of them. Although various additives can be added to such ionizing radiation curing coating materials, when ultraviolet radiation is used for curing, it is preferable to add a photopolymerization initiator, an ultraviolet radiation sensitizing agent, and so forth.

The adhesive layer may contain a thermoplastic resin such as acrylic adhesive resins, besides the curable resins mentioned above. If a thermoplastic resin is mixed, pressure-sensitive adhesive property at ordinary temperature can be imparted to the adhesive layer, and therefore the plastic films can be easily adhered with such an adhesive layer. Moreover, by mixing a thermoplastic resin, the Martens hardness can be controlled so that rise or separation of the plastic film from the adhesive layer becomes hard to occur at the time of die cutting. In order to obtain the laminated plate with high stiffness, the thermoplastic resin is preferably contained in an amount of 60% or less of the resin constituting the adhesive layer.

To the adhesive layer, additives such as leveling agents, ultraviolet absorbers and anti-oxidants may be added, besides the resins mentioned above.

As the adhesive layer, the aforementioned thermosetting resin or ionizing radiation curable coating material is cured by heating and/or irradiating ionizing radiation. The term "cure" used here refers to change of state from a state of coating material showing flowability at ordinary temperature to a state no longer showing flowability, and degree of curing may have a certain margin. The degree of curing can be adjusted by controlling irradiation dose.

Thickness of the cured adhesive layer is preferably 1 to 50 µm. As for the minimum thickness of the adhesive layer, the thickness is preferably 2 µm or larger, more preferably 5 µm or larger, still more preferably 10 µm or larger, and as for the maximum thickness of the adhesive layer, the thickness is preferably 40 µm or smaller, more preferably 30 µm or smaller. With a thickness of 1 µm or larger, sufficient stiffness and adhesive strength can be obtained. The thickness is preferably 50 µm or smaller, because even if the thickness is made larger than 50 µm, the effect of increasing stiffness by increasing the thickness cannot be obtained so much, and the thickness of the laminated plate become unduly large. Moreover, if the thickness of the adhesive layer is made larger, irradiation dose of the ionizing radiation to the plastic films must be increased to invite degradation of the plastic films.

Hardness of the cured adhesive layer is 260 N/mm² or lower, preferably 200 N/mm² or lower, particularly preferably 100 N/mm² or lower, in terms of the Martens hardness. The Martens hardness represents the hardness (difficulty of denting) of the adhesive layer, which is calculated from a test load and pushed area when pushing the surface of the adhesive layer with a Vickers indenting tool, and serves as an index of the hardness of the adhesive layer. In this specification, the values of the Martens hardness are values measured by the method defined in ISO-14577-1 with a super-microhardness tester (trade name: Fischer Scope HM2000, Fischer Instruments Corporation) in an atmosphere of a temperature of 20°C and a relative humidity of 60%. With a Martens hardness of the adhesive layer of 260 N/mm² or lower, generation of rise or separation of the plastic film from the adhesive layer can be prevented at the time of performing die cutting. It is considered that this is because if the Martens hardness is higher than 260 N/mm², a strong force is required to cut the plastic film with a blade, repelling force of the plastic film becomes unduly large, and therefore rise or separation of the plastic film from the adhesive layer is generated. As for the minimum value of the Martens hardness, it is preferably 1 N/mm² or higher, more preferably 2 N/mm² or higher. With a Martens hardness of 1 N/mm² or higher, high stiffness can be maintained, and even when pressure is applied to a part of the laminate, such a hardness prevents a mark from remaining at the pushed position.

As for the method for adjusting the Martens hardness of the adhesive layer to be 260 N/mm² or lower, it can be adjusted by controlling composition of the monomers and oligomers constituting the resin used for the adhesive layer, or composition of the resin used for the adhesive layer (combination of resins having different Martens hardness values, addition of a thermoplastic resin, or the like). It is especially preferable to use an acrylate type monomer having hydroxy group or amino group as a photopolymerizable monomer. By using an acrylate type monomer having hydroxy group or amino group, adhesive strength can be increased, and by controlling the amount thereof, the Martens hardness can be adjusted. Specific examples include acrylates having hydroxy group such as hydroxyethyl acrylate, hydroxypropyl acrylate, 2-hydroxybutyl acrylate and 4-hydroxybutyl acrylate, methacrylates having hydroxy group such as hydroxyethyl methacrylate, hydroxypropyl methacrylate and 2-hydroxybutyl methacrylate, acrylamides such as dimethylacrylamide, dimethylaminopropylacrylamide, diethylacrylamide, and hydroxyethylacrylamide, dimethylaminoethyl acrylate, acryloyl morpholine, and so forth.
In addition, the Martens hardness of the adhesive layer can also be adjusted by adding a thermoplastic resin, controlling irradiation dose of ionizing radiation at the time of curing of the adhesive layer, or the like, as described above.

As for the adhesive strength of the adhesive layer, the adhesive layer preferably has adhesive strength in such a degree that after two of the plastic films are adhered with the adhesive layer and the adhesive layer is cured, the plastic films cannot be easily delaminated at the interface of the plastic films when they are separated. This is because if the adhesive strength is in such a degree that the plastic films are easily delaminated at the interface of the plastic films, rise or separation of the plastic films are caused by the repelling force of the plastic films at the time of performing die cutting. Moreover, even if they are not delaminated at the interface, weak adhesive strength also invites the rise or separation due to the repelling force of the plastic films. Therefore, the adhesive strength between the plastic film and the adhesive layer is preferably 5 N/25 mm width or higher, more preferably 10 N/25 mm width or higher. The adhesive strength is still more preferably 15 N/25 mm width or higher, and with such an adhesion, two of the plastic films can hardly be separated.
The adhesive strength can be adjusted by suitably choosing types of the monomers and oligomers constituting the resin used for the adhesive layer, or controlling composition of the resin used for the adhesive layer.

The laminated plate of the present invention is produced by adhering at least two or more of the plastic films with the adhesive layer. For example, the laminated plate is produced by forming the adhesive layer on one of the plastic films, adhering another plastic film on the coated surface, and then curing the adhesive layer by heating or irradiating ionizing radiation. Examples of the method for forming the adhesive layer include a method of preparing a coating solution by dissolving or dispersing components of a thermosetting resin or an ionizing radiation curable resin in an appropriate solvent, or mixing the components of the adhesive layer without using any solvent, applying the coating solution on the plastic film by a known method such as roll coating, bar coating, spray coating and air knife coating, and performing heating or irradiation of ionizing radiation as required. The irradiation dose of ionizing radiation is preferably 500 to 1500 mJ.

On the surface of the laminated plate of the present invention, layers of various functions such as a hard coat layer, a diffusion layer, an anti-fogging layer, a self-cleaning layer, a recording layer, and an anti-blocking layer can be provided depending on use. When it is used as a surface protection plate, in particular, it is preferred that it has a hard coat layer on at least one surface.

By providing a hard coat layer, stiffness can be further increased, and by using such a laminated plate as a surface protection plate of a display device so that the surface having the hard coat layer is the outer surface, anti-scratching property of the surface protection plate can be obtained. A matting agent can be added to the hard coat layer in order to preventing reflection of outer lights. Thickness of the hard coat layer is preferably 2 to 15 µm, since such a thickness does not disturb die cutting.

The diffusion layer is a layer for imparting light diffusing property to the laminated plate, and it is typically a layer comprising a transparent resin and a light-diffusing agent dispersed in the resin. The anti-fogging layer is a layer for preventing fogging with steam, and it is a layer of which surface is hydrophilized with a hydrophilic resin or a surfactant. The self-cleaning layer is a layer comprising a photocatalyst such as titanium dioxide, and showing hydrophilicity with light, and it has a function of enabling washing off dusts and dirt adhering to the surface with water.

The recording layer is a layer for imparting ink receiving property such as that for ink-jet recording, laser printer, or the like, to the laminated plate, and a known recording layer can be formed according to the recording method to be used. The anti-blocking layer is a layer for preventing blocking at the time of piling up the laminated plates or the laminated plates and other films, and the function of the anti-blocking layer can also be imparted to another functional layer such as the hard coat layer. To these functional layers, additives such as leveling agents, ultraviolet absorbers and anti-oxidants may be added.

A functional layer can be formed by applying a coating solution containing a material constituting the functional layer by a known method such as roll coating, bar coating, spray coating and air knife coating on the plastic film, and performing heating or irradiation of ionizing radiation as required, as in the case of formation of the adhesive layer.

Although the laminated plate of the present invention is a material suitable for a surface protection plate of a display device, it can also be used for uses other than a surface protection plate, and can be processed by die cutting into a desired shape according to use.

Die cutting can be performed by a conventionally known method with, for example, a die cutting machine using a Thompson blade die.

By performing die cutting using a die cutting machine as described above, simultaneous processing of two or more plates or a large area is enabled, the processing can be performed with a short processing time even when the thickness of the laminated plate is increased, and thus manufacturing efficiency can be improved compared with laser cutting. Moreover, since the laminated plate has the specific structure and has the adhesive layer having a Martens hardness within a specific range, the laminated plate is not broken at the time of die cutting, and does not cause rise or separation of the plastic film from the adhesive layer at the interface thereof.

Hereafter, the display device of the present invention will be explained.

The display device of the present invention is characterized by using the laminated plate of the present invention described above as a surface protection plate of the display device.

As the display device, a liquid crystal display, a plasma display, an EL display, and so forth can be used. Hereafter, an example of using the laminated plate for a liquid crystal display is explained.

Fig. 1 is a sectional view of an embodiment of the liquid crystal display 6. This liquid crystal display 6 has a configuration that it comprises a liquid crystal cell 1 consisting of glass substrates 11 and liquid crystal 12, polarizing plates 2 disposed on both sides of the liquid crystal cell 1, a backlight 3, and a case 4, and a surface protection plate 5 is further disposed on the polarizing plate 2 on the display surface side.

As the members constituting the liquid crystal display other than the surface protection plate, conventionally known members can be used.

If a display device is constituted as the display device of the present invention described above, rise or separation of the plastic film from the adhesive layer is not generated at the time of performing die cutting, therefore productivity of the surface protection plate is improved, and thus productivity of the display device can also be improved. Moreover, blur of displayed images due to bending of the surface protection plate is not caused even when the display surface is touched, and the surface protection plate is hardly broken by impact, in spite of use of a thin surface protection plate.

### Examples

Hereafter, the present invention will be further explained with reference to examples. The term and symbol "part" and "%" are used on weight basis, unless specifically indicated.

### [Example 1]

### Production of transparent polyester film having hard coat layer

On a transparent polyester film A having a thickness of 188 µm (COSMOSHINE A4300, Toyobo Co., Ltd.), a coating solution for hard coat layer having the following composition was applied in a thickness of 5 µm by bar coating, and ultraviolet irradiation was performed to produce a transparent polyester film having a hard coat layer.

### <Coating solution for hard coat layer>

- Ionizing radiation curable resin
   (Diabeam UR6530, Mitsubishi Rayon Co., Ltd.) 58 parts
- Photopolymerization initiator
   (Irgacure 651, Ciba Japan K.K.) 1.8 parts
- Methyl ethyl ketone 80 parts
- Toluene 60 parts
- Ethyl cellosolve 7 parts

### Production of laminated plate

On the surface of the transparent polyester film having a hard coat layer of the side opposite to the hard coat layer side, a coating solution for adhesive layer having the following composition was applied in a thickness of 10 µm by bar coating. A transparent polyester film B having a thickness of 188 µm (COSMOSHINE A4300, Toyobo Co., Ltd.) was adhered to the adhesive layer, and ultraviolet irradiation was performed to produce a laminated plate of Example 1.

### <Coating solution for adhesive layer>

- Photo cation polymerizable oligomer
   (NK Oligo U-200PA, Shin-Nakamura Chemical Co., Ltd.) 60 parts
- Hydroxyethyl methacrylate 35 parts
- 2-Hydroxyethyl acrylate 5 parts
- Photo cation polymerization initiator
   (Irgacure 184, Ciba Japan K.K.) 5 parts

### [Example 2]

A laminated plate of Example 2 was produced in the same manner as that of Example 1 except that the coating solution for adhesive layer used in Example 1 was replaced with the following coating solution for adhesive layer.

### <Coating solution for adhesive layer>

- Photo cation polymerizable oligomer
   (NK Oligo U-200PA, Shin-Nakamura Chemical Co., Ltd.) 30 parts
- Photo cation polymerizable oligomer
   (Aronix M-6100, Toagosei Co., Ltd.) 30 parts
- Hydroxyethyl methacrylate 40 parts
- Photo cation polymerization initiator
   (Irgacure 184, Ciba Japan K.K.) 5 parts

### [Example 3]

A laminated plate of Example 3 was produced in the same manner as that of Example 1 except that the coating solution for adhesive layer used in Example 1 was replaced with the following coating solution for adhesive layer.

### <Coating solution for adhesive layer>

- Photo cation polymerizable oligomer
   (KAYARAD R-115, Nippon Kayaku Co., Ltd.) 30 parts
- Photo cation polymerizable oligomer
   (Aronix M-6100, Toagosei Co., Ltd.) 30 parts
- Hydroxyethyl methacrylate 40 parts
- Photo cation polymerization initiator
   (Irgacure 184, Ciba Japan K.K.) 5 parts

### [Example 4]

A laminated plate of Example 4 was produced in the same manner as that of Example 1 except that the coating solution for adhesive layer used in Example 1 was replaced with the following coating solution for adhesive layer.

### <Coating solution for adhesive layer>

- Photo cation polymerizable oligomer
   (KAYARAD R-115, Nippon Kayaku Co., Ltd.) 60 parts
- Hydroxyethyl methacrylate 40 parts
- Photo cation polymerization initiator
   (Irgacure 184, Ciba Japan K.K.) 5 parts

### [Example 5]

A laminated plate of Example 5 was produced in the same manner as that of Example 1 except that both the transparent polyester film A and the transparent polyester film B used in Example 1 were replaced with a polyester film having a thickness of 250 µm (COSMOSHINE A4300, Toyobo Co., Ltd.).

### [Example 6]

A laminated plate of Example 6 was produced in the same manner as that of Example 1 except that both the transparent polyester film A and the transparent polyester film B used in Example 1 were replaced with a polyester film having a thickness of 100 µm (COSMOSHINE A4300, Toyobo Co., Ltd.).

### [Example 7]

A polyester film having a hard coat layer was produced in the same manner as that of Example 1 except that a transparent polyester film C having a thickness of 250 µm (COSMOSHINE A4300, Toyobo Co., Ltd.) was used instead of the transparent polyester film A used in Example 1. Then, on the surface of the transparent polyester film having the hard coat layer of the side opposite to the hard coat layer side, and one surface of a transparent polyester film D having a thickness of 188 µm (COSMOSHINE A4300, Toyobo Co., Ltd.), the same coating solution for adhesive layer as that of Example 1 was applied in a thickness of 10 µm, respectively, by bar coating to obtain two of adhesive films. Subsequently, two of the obtained adhesive films and a transparent polyester film E having a thickness of 250 µm (COSMOSHINE A4300, Toyobo Co., Ltd.) were adhered in a layer structure of hard coat layer/film C/adhesive layer/film D/adhesive layer/film E, and ultraviolet irradiation was performed to cure the adhesive layers and thereby produce a laminated plate of Example 7.

### [Example 8]

A laminated plate of Example 8 was produced in the same manner as that of Example 7 except that the transparent polyester film D used in Example 7 was replaced with a transparent polyester film having a thickness of 250 µm (COSMOSHINE A4300, Toyobo Co., Ltd.).

### [Comparative Example 1]

A laminated plate of Comparative Example 1 was produced in the same manner as that of Example 1 except that the coating solution for adhesive layer used in Example 1 was replaced with the following coating solution for adhesive layer.

### <Coating solution for adhesive layer>

- Photo cation polymerizable oligomer
   (KAYARAD R-115, Nippon Kayaku Co., Ltd.) 50 parts
- Photo cation polymerizable monomer
   (NK Ester A-TMM-3N, Shin-Nakamura Chemical Co., Ltd.) 30 parts
- Photo cation polymerizable monomer
   (ACMO, Kohjin Co., Ltd.) 20 parts
- Photo cation polymerization initiator
   (Irgacure 184, Ciba Japan K.K.) 5 parts

### [Comparative Example 2]

A laminated plate of Comparative Example 2 was produced in the same manner as that of Example 1 except that the coating solution for adhesive layer used in Example 1 was replaced with the following coating solution for adhesive layer.

### <Coating solution for adhesive layer>

- Photo cation polymerizable oligomer
   (NK Oligo U-15HA, Shin-Nakamura Chemical Co., Ltd.) 100 parts
- Photo cation polymerization initiator
   (Irgacure 184, Ciba Japan K.K.) 5 parts

### [Comparative Example 3]

A laminated plate of Comparative Example 3 was produced in the same manner as that of Example 1 except that the coating solution for adhesive layer used in Example 1 was replaced with the following coating solution for adhesive layer.

### <Coating solution for adhesive layer>

- Photo cation polymerizable monomer
   (NK Ester A-TMM-3N, Shin-Nakamura Chemical Co., Ltd.) 100 parts
- Photo cation polymerization initiator
   (Irgacure 184, Ciba Japan K.K.) 5 parts

### [Comparative Example 4]

A laminated plate of Comparative Example 4 was produced in the same manner as that of Example 1 except that the coating solution for adhesive layer used in Example 1 was replaced with the following coating solution for intermediate layer.

### <Coating solution for intermediate layer>

- Photo cation polymerizable oligomer
   (NK Oligo U15-HA, Shin-Nakamura Chemical Co., Ltd.) 90 parts
- Butyl acrylate 10 parts
- Photo cation polymerization initiator
   (Irgacure 184, Ciba Japan K.K.) 5 parts

### [Comparative Example 5]

On a transparent polyester film having a thickness of 250 µm (COSMOSHINE A4300, Toyobo Co., Ltd.), a coating solution for hard coat layer having the following composition was applied in a thickness of 5 µm by bar coating, and ultraviolet irradiation was performed to produce a film having a hard coat layer of Comparative Example 5.

### <Coating solution for hard coat layer>

- Ionizing radiation curable resin
   (Diabeam UR6530, Mitsubishi Rayon Co., Ltd.) 58 parts
- Photopolymerization initiator
   (Irgacure 651, Ciba Japan K.K.) 1.8 parts
- Methyl ethyl ketone 80 parts
- Toluene 60 parts
- Ethyl cellosolve 7 parts

### [Comparative Example 6]

A film having a hard coat layer of Comparative Example 6 was produced in the same manner as that of Comparative Example 5 except that the transparent polyester film used in Comparative Example 5 was replaced with a transparent polyester film having a thickness of 188 µm (COSMOSHINE A4300, Toyobo Co., Ltd.).

### (1) Martens hardness

On a transparent polyester film F having a thickness of 188 µm (COSMOSHINE A4300, Toyobo Co., Ltd.), each of the coating solutions for adhesive layer of Examples 1 to 8 and Comparative Examples 1 to 4 was applied in a thickness of 10 µm by bar coating. A mold releasing film was adhered to the adhesive layer, and ultraviolet irradiation was performed to cure the adhesive layer (irradiation dose: 1000 mJ). Then, the mold releasing film was delaminated from the adhesive layer, and hardness of the surface of the adhesive layer was measured by the method defined in ISO-14577-1 with a super-microhardness tester (trade name: Fischer Scope HM2000, Fischer Instruments Corporation) in an atmosphere of a temperature of 20°C and a relative humidity of 60%. The values are values measured with a maximum test load of 1 mN. The results are shown in Table 1.

Measurement and evaluation of the following items were performed for the laminated plates and the films having a hard coat layer obtained in Examples 1 to 8 and Comparative Examples 1 to 6. The results are shown in Table 1.

### (2) Processibility (separation and rise)

Die cutting was performed with a die cutting machine (hand-operating press machine, model: Torque pack press TP series, Amada Co., Ltd.). The result that separation or rise was not generated during the die cutting is indicated with the symbol "O", and the result that separation or rise was generated during the die cutting is indicated with the symbol " × ".

### (3) Adhesive property

The polyester film having a hard coat layer of each laminated plate and other members constituting the laminated plate were delaminated at a delamination rate of 100 mm/minute to right and left in the same manner as that of the T type delamination test to measure delamination force. The result that the force required for delamination was 10 N/25 mm width or higher is indicated with the symbol "O", and the result that the force required for delamination was lower than 10 N/25 mm width is indicated with the symbol "X".

### <Production of display device>

Each of the laminated plates and the films having a hard coat layer obtained in Examples 1 to 8 and Comparative Examples 1 to 6 was incorporated into a cellular phone (P901i, NTT DoCoMo, Inc.) as a surface protection plate so that the hard coat layer was on the surface side to produce display devices of Examples 1 to 8 and Comparative Examples 1 to 6.

### (4) Stiffness

The surface protection plates of the display devices of Examples 1 to 8 and Comparative Examples 1 to 6 were touched with a finger. The result that blur of liquid crystal display was not observed even when the surface protection plate was pushed with the finger is indicated with the symbol "⊚", the result that slight blur was observed when the surface protection plate was touched with the finger is indicated with the symbol "O", and the result that conspicuous blur was observed when the surface protection plate was touched with the finger is indicated with the symbol "X".

**[Table 1]**

| | Thickness of laminated plate (except for hard coat layer) [µm] | Martens hardness [N/mm²] | Processibility (separation or rise) | Adhesive property | Stiffness |
|---|---|---|---|---|---|
| Example 1 | 386 | 8 | O | O | ⊚ |
| Example 2 | 386 | 20 | O | O | ⊚ |
| Example 3 | 386 | 180 | O | O | ⊚ |
| Example 4 | 386 | 258 | O | O | ⊚ |
| Example 5 | 510 | 8 | O | O | ⊚ |
| Example 6 | 210 | 8 | O | O | O |
| Example 7 | 708 | 8 | O | O | ⊚ |
| Example 8 | 770 | 8 | O | O | ⊚ |
| Comparative Example 1 | 386 | 270 | × | O | ⊚ |
| Comparative Example 2 | 386 | 354 | × | O | ⊚ |
| Comparative Example 3 | 386 | 397 | × | O | ⊚ |
| Comparative Example 4 | 386 | 330 | × | × | ⊚ |
| Comparative Example 5 | 250 | - | - | - | O |
| Comparative Example 6 | 188 | - | - | - | × |

As clearly seen from the results shown above, in the laminated plates of Examples 1 to 8, the Martens hardness of the adhesion layer was lower than 260 N/mm², and therefore rise or separation could be prevented when the die cutting was performed. In particular, the laminated plates of Examples 1 to 5 had a total thickness of the laminated plate within the range of 250 to 700 µm, showed sufficient stiffness, and did not showed blur of displayed images due to bending of the surface protection plate when they were used in the display devices, and therefore they were particularly excellent.

Moreover, the laminated plate of Example 1 showed an adhesive strength of the adhesive layer more than 15 N/25 mm width. Therefore, after die cutting was performed, two of the plastic films could not be separated, and they were especially firmly adhered.

The laminated plate of Example 6 had a smaller total thickness of the laminated plate compared with the surface protection plate of Example 1. Since the laminated plate of Example 6 had a relatively small total thickness (210 µm), when the display of Example 6 using it was touched with a finger, slight blur was observed, but stiffness was comparable to that of one sheet of plastic film having a larger thickness (Comparative Example 5, 250 µm), and thus it was demonstrated that it had a higher stiffness compared with one sheet of plastic film having a comparable thickness.

Further, the laminated plates of Examples 7 and 8 had a larger total thickness of the laminated plate compared with the surface protection plate of Example 1. Since they had a large thickness, they showed high stiffness, and did not show blur of displayed images due to bending of the surface protection plate when they were used in the display devices, and thus they were especially excellent. However, since they had a large total thickness, they required a stronger force for the die cutting compared with the laminated plates of Examples 1 to 6.

On the other hand, in the laminated plates of Comparative Examples 1 to 3, since the Martens hardness of the adhesion layer was larger than 260 N/mm², they showed rise or separation when die cutting was performed.

In the laminated plate of Comparative Example 4, the Martens hardness of the intermediate layer provided instead of the adhesive layer was larger than 260 N/mm², and the adhesion strength of two of the plastic films was lower than 10 N/25 mm width. Therefore, the plastic films were easily separated due to the bad adhesion property of the plastic films and the adhesive layer, therefore repelling force of the plastic films could not be controlled at the time of die cutting, and rise or separation was generated.

The films having a hard coat layer of Comparative Examples 5 to 6 consisted of one plastic film and a hard coat layer provided on the plastic film. Since they were not constituted with two or more laminated plastic films, and the plastic film thereof had a small thickness, they did not show sufficient stiffness.

### Explanation of Numerical Notations

- 1: Liquid crystal cell
- 2: Polarizing plate
- 3: Backlight
- 4: Case
- 5: Surface protection plate
- 6: Liquid crystal display device

## Claims

1. A laminated plate comprising at least two or more plastic films adhered with an adhesive layer, wherein the adhesive layer has a Martens hardness of 260 N/mm² or lower.

2. The laminated plate according to claim 1, wherein the laminated plate has a thickness of 250 to 700 µm, and each of the plastic films has a thickness of 50 to 400 µm.

3. The laminated plate according to claim 1 or 2, wherein a resin constituting the adhesive layer contains a thermosetting resin or an ionizing radiation curable resin.

4. The laminated plate according to any one of claims 1 to 3, which has a hard coat layer on at least one surface.

5. A display device using the laminated plate according to any one of claims 1 to 4 as a surface protection plate of the display device.

6. A method for producing a surface protection plate by die cutting of a laminated plate comprising at least two or more plastic films adhered with an adhesive layer, wherein:
a laminated plate having an adhesive layer showing a Martens hardness of 260 N/mm² or lower is used as the laminated plate.
